# EUROPEAN PATENT APPLICATION

(11) **EP 3 736 751 A1**
(43) Date of publication of application: **11.11.2020**
(21) Application number: 19172835.1
(22) Date of filing: 06.05.2019
(51) Int. Cl.: G06Q 10/06

(54) **SYSTEM, DEVICE AND METHOD OF MANAGING AN ASSET MODEL FOR ASSETS IN AN INDUSTRIAL INTERNET OF THINGS (IIOT) ENVIRONMENT**

(71) Applicant: Siemens Aktiengesellschaft, 80333 München (DE)
(72) Inventor: SINGH, Ankit, 91058 Erlangen (DE); SHENOY, Gireesha, 560103 Bangalore (IN)
(74) Representative: Isarpatent

(57) **Abstract**

The present invention discloses a system, device and method of managing an asset model for assets in an Industrial Internet of Things (IIoT) environment. The method includes receiving heterogenous data streams associated with the IIoT environment (180, 280); obtaining an asset datastructure instance (402, 404, 422), wherein the asset datastructure instance (402, 404, 422) indicates a state of the asset (182-188, 282) in the IIoT environment (180, 280); and generating the asset model (400) of the asset (182-188, 282) from a plurality of asset datastructure instances (402, 404, 422).

## Description

An asset may be composed of hardware and software components. For example, an asset has physical/hardware components such as actuators, sensors, communication devices etc. Further, the asset has software components such as firmware, warranty info, manuals etc. Therefore, the asset has heterogenous data streams associated with the asset.

Heterogeneous data streams may require extra effort to organize and store on computing device or platform. Especially, in case of a cloud computing platform, multiple assets with their associated heterogenous data streams need to be organized on the cloud computing platform. Further, the challenge increases when a new data type is added or removed during operation of the asset. Furthermore, maintaining the version of the various data streams for the asset may complicate management of the heterogenous data streams.

One approach to effectively manage the heterogenous data streams includes storing the heterogenous data streams on relational or No-Sql databases. However, such techniques need the heterogenous data streams to be modelled in advance. Adding or removing or updating data types in the database may increase the complexity, errors and time consumed to perform such updates. Further, such techniques may not be able to manage variation in states of the asset.

The heterogenous data streams are used to generate and manage an asset model associated with the asset. The asset model in turn enables effective condition monitoring of the asset. There exists a need to manage asset models by effective management of the heterogenous data streams associated with an asset.

In particular, handling such data streams may benefit from improvements. According to a first aspect of the present invention a method of managing an asset model for at least one asset in an Industrial Internet of Things (IIoT) environment comprises: receiving heterogenous data streams associated with the IIoT environment; obtaining an asset datastructure instance, wherein the asset datastructure instance indicates a state of the asset in the IIoT environment; and generating the asset model of the asset from a plurality of asset data-structure instances.

The method includes receiving heterogenous data streams associated with the IIoT environment. The heterogenous data streams may include a series of data points that reflect the operation of the IIoT environment and the asset. For example, the heterogenous data streams include sensor data from sensing and monitoring devices in the IIoT environment.

Further, the heterogenous data streams may include event logs, Computer Aided Design (CAD) drawings of the asset, blue-print of the IIoT environment, firmware of operating system controlling the asset and/or the IIoT environment, warranty details, operating and service manuals of the asset and the IIoT environment. As indicated hereinabove, the heterogenous data streams may be varied and not comparable.

Furthermore, the heterogenous data streams may be generated based on historical data and/or real-time data. For example, the historical data of the asset and the IIoT environment may be stored in a remote database of a cloud computing platform. The real-time data (generated by the sensing and monitoring devices) may be analysed within the premises of the IIoT environment by a thin-client device, such as an IoT gateway. The present invention advantageously links the varied heterogenous data streams stored on multiple computing devices (such as remote database and IoT gateway) to generate and manage the asset model of the asset in the IIoT environment.

The method may include generating meta-data for the asset. As used herein "meta-data" refers to data that describes the heterogenous data streams. The meta-data may be tags that add meaning to one or more data points in the heterogenous data streams. Meta-data examples include unique identification number, type of asset, firmware version, warranty version, anti-virus software, security certificates, software patches, and/or components of the asset. For example, the meta-data are generated using multiple annotation techniques. In another example, the meta-data may be generated by performing a sensitivity analysis on the data points in the heterogenous data streams. In yet another example, the meta-data may be autonomously learnt using associative networks.

The method may include determining association between data points in the heterogenous data streams to generate the meta-data. In a preferred example, the association between the data points is determined using a language independent data-interchange format. The data point associations are defined as datastructure instances, such as the asset datastructure instance. Example language independent data-interchange formats include JavaScript Object Notation (JSON), Extended Mark-up Language (XML).

The method consequently includes generating the asset data-structure instances at predetermined states of the asset based on the meta-data generated from the heterogenous data streams. In an embodiment, the asset datastructure instances are determined at each state. In another embodiment, the method includes determining the predetermined states at which the asset datastructure instances are to be generated. For example, the predetermined states are determined using existing neural network algorithms.

As used herein "states" refers to the real-time condition of the asset. For example, the state of the asset includes the remaining life of components of the asset, firmware version of the asset, communication protocol version, etc. The states include a hard state and a soft state. The hard state refers to a state transition of the asset operating conditions such that automatic reversal of the state transition is not possible. The asset in the soft state is capable of automatically and/or autonomously reversing the state transition.

Example of the hard state is the state of the asset after replacement of a hardware component in the asset. Example of the soft state is firmware version of the asset after updation. The method may include determining the state of the asset in the IIoT environment. The state is determined as either the hard state or the soft state. The determination is based on the reversibility of the state transition. For example, if the anti-virus software of the asset is updated from version 1.0 to 1.12. The anti-virus software version can be reversed to version 1.0.

The method may include generating component datastructure instances for the components of the asset. As indicated earlier, the components include the hardware components and the software components of the asset. The component datastructure instances are generated using the language independent data-interchange format such as JSON. The method may further in-elude generating the asset datastructure instances by linking component datastructure instances at the predetermined states. The method advantageously links the heterogenous data streams associated with the components of the asset.

The asset datastructure instances may be used a building-block for the asset model. The asset model may be generated by aggregating the asset datastructure instances across multiple states of the asset. In certain embodiments, the asset model is also referred to as a digital twin of the asset.

According to an embodiment of the present invention, the method may include initiating a roll-back of a new-asset datastructure instance reflecting a new state of the asset to an older-asset datastructure instance reflecting an older state of the asset. Further, the asset model is updated based on the roll-back to the older-asset datastructure instance. Therefore, the method advantageously stipulates how to manage the asset model when the asset transitions from the new state (unstable) to the older state (stable).

The method may further include determining requirement of the roll-back of the asset to the older state based on stability of the new state of the asset. The stability of the new state is determined based on anomalies detected in the asset when in the new state. The anomalies may include malfunction of one or more components of the asset, high bandwidth consumption, deviations in operation parameters devices connected to the asset.

The method may include determining the anomalies in the asset when in the new state. In an embodiment, the method includes determining whether the anomalies exist if the roll-back to the old state is effected. Further, the method may include displaying the anomalies and the requirement of the roll-back of the asset to a user. Furthermore, the method may include displaying differences between the older state and the new state of the asset.

The method may include storing the generated asset model of the asset. The asset model may be preferably stored in a database of a computing platform. A "computing platform" refers to a processing platform comprising configurable computing physical and logical resources, servers, storage, applications, services, etc. An example computing platform is a cloud computing platform that provides on-demand network access to a shared pool of the configurable computing physical and logical resources.

The method may further include accessing the heterogenous data streams that is associated with one of the IIoT environment and the asset using the generated asset model. Accordingly, the method advantageously provides access to the heterogenous data streams that may be stored in multiple devices without duplication of the data points.

According to a second aspect of the present invention an apparatus for managing the asset model for the asset in the IIoT environment includes one or more processing units. The apparatus also includes a memory unit communicative coupled to the one or more processing units. The memory unit may be volatile memory and non-volatile memory. The processing units may execute instructions and/or code stored in the memory unit. A variety of computer-readable storage media may be stored in and accessed from the memory unit. The memory unit may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present invention, the memory unit comprises a model management module stored in the form of machine-readable instructions executable by the one or more processing units. The model management module is configured to perform one or more method as described above.

According to a third aspect of the present invention a system for managing the asset model for the asset in the IIoT environment includes a cloud computing platform comprising the model management module configured to perform one or more method as described above. The cloud computing platform can be a cloud infrastructure capable of providing cloud-based services such as data storage services, data analytics services, data services, etc. The cloud computing platform can be part of public cloud or a private cloud. Usage of the cloud computing platform is advantageous as it may enable data scientists/software vendors to provide software applications/firmware as a service, thereby eliminating a need for software maintenance, upgrading, and backup by the users.

According to a fourth aspect of the present invention a computer-program product has machine-readable instructions stored therein, which when executed by a processor unit, cause the processor unit to perform a method as described above.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of a system to generate asset models for assets in an Industrial Internet of Things (IIoT) environment, according to an embodiment of the present invention;
- FIG 2: illustrates a block diagram of an apparatus to manage an asset model for an asset, according to an embodiment of the present invention;
- FIG 3: illustrates an asset datastructure instance for the asset in FIG 2, according to an embodiment of the present invention;
- FIG 4: illustrates an asset model for the asset in FIG 2, according to an embodiment of the present invention; and
- FIG 5: is a flowchart of a method of managing an asset model for an asset in an Industrial Internet of Things (IIoT) environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

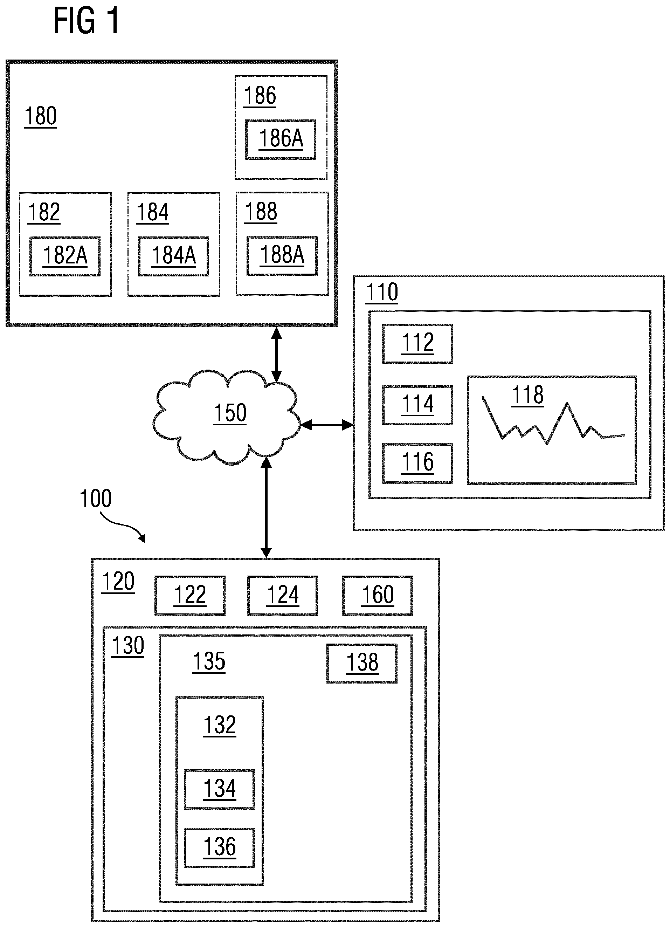

FIG 1 illustrates a block diagram of a system 100 to manage asset models for assets 182, 184, 186 and 188 in an Industrial Internet of Things (IIoT) environment 180, according to an embodiment of the present invention. The assets 182-188 in the IIoT environment 180 may also be referred to as IoT enabled devices. Example assets include machinery, equipment, rotating machines, magnetic devices, etc. The assets 182-188 are connected to a cloud computing platform 120 a network interface 150.

The IIoT environment 180 may further include sensing and measuring devices (not shown in FIG 1) capable of generating heterogenous data streams associated with operation of the assets 182-188 in the IIoT environment 180. The heterogenous data streams are communicated to the cloud computing platform 120 via the network interface 150.

The heterogenous data streams include data generated by the sensing and measuring devices. For example, the devices include individual or hybrid sensors capable of measuring and communicating the operating parameters of the assets 182-188. For example, the sensing and monitoring devices may include thermal imaging devices, vibration sensors, current and voltage sensors, etc.

Sensor data generated by the sensing and monitoring devices include data-points that indicate a measure of operating parameters associated with the IIoT environment, the assets 182, 184, 186, 188 and associated components 182a, 184a, 186a, 188a. The term "operation parameter" refers to one or more characteristics of the IIoT environment 180, the assets 182-188 and the components 182a-188a. The operation parameters are used to define performance of the assets 182-188. Example operation parameters include ambient temperature, air quality, IIoT environment 180 connectivity to network interface 150, etc. Operation parameters for the assets 182a-188a depend on the type of asset and may include vibration, temperature, rotation speed, pressure, etc.

Further, the heterogenous data streams also include events log of the IIoT environment 180, firmware version, asset-firmware interoperability, warranty, asset and component specification, operation manual, service manual, maintenance history, etc. Furthermore, the heterogenous data streams also include information of components 182a-188a and the sensing and measuring devices. Accordingly, heterogenous data streams include all data associated with the IIoT environment 180 and the assets 182-188.

The system 100 receives the heterogenous data streams associated with the IIoT environment 180 via a communication unit 122. The system includes the cloud computing platform 120 with the communication unit 122, a processing unit 124, a memory unit 130 and a database 160. The cloud computing platform 120 can be a cloud infrastructure capable of providing cloud-based services such data storage services, data analytics services, data visualization services, etc.

The system 100 is communicatively coupled to a user device 110. For example, the cloud computing platform 120 is communicatively coupled to the user device 110 via a communication unit 112 and the network interface 150. The user device 110 includes a processor 114, a memory 116 and a display 118. The user device 110 receives the asset models and generates condition monitoring and predictive maintenance reports on the display 118. For example, the display 118 displays the asset remaining life and predicted down-time of the IIoT environment 180 based on the asset models.

The cloud computing platform 120 is configured to generate and manage asset models of the assets 182-188 based on the heterogenous data streams. Accordingly, the memory unit 130 includes a model management module 135. The model management module 135 includes a datastructure module 132 and a model generator module 138. The datastructure module 132 includes a meta-data module 134 and a state module 136.

The model management module 135 is executed by the processing unit 124. During execution, the meta-data module 134 is configured to generate meta-data for the assets 182-188. The meta-data acts like tags that add meaning to the data point. For example, meta-data includes unique identification number, type of asset, firmware version, warranty version, and/or components of the asset.

The meta-data module 134 generates the meta-data by determining association between data points in the heterogenous data streams. For example, the associations between the data points can be identified by using techniques such as semantic annotation of the data points. Accordingly, the data points can be tagged to asset type, warranty version, etc.

In an embodiment, the association between the data points is determined by using a language independent data-interchange format. The data points are defined as datastructure instances. For example,

```
{"asset id": "comp-heatpump-chp1234", g:]
 "type": "dynamic axial flow",
 "model": "CH0021",
 "sub-components": [
     "blade": {
     "type": "thermal barrier coated"
     }]
 }
```

Example language independent data-interchange formats include JavaScript Object Notation (JSON), Extended Mark-up Language (XML), etc.

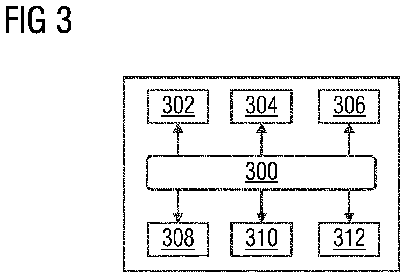

The datastructure module 132 is therefore configured to generate asset datastructure instances by tagging the meta-data as indicated above. Further, the asset datastructure instances are generated by generating component datastructure instances for components 182a-188a of the assets 182-188. For example, the component 182a includes sub-components such as component service data, component warranty version, sensors, etc. The component datastructure instances are thereby created based on the sub-components. Ultimately, the asset data-structure instances by linking component data-structure instances. Accordingly, the asset datastructure instances can be modelled as branching model with the component datastructure instances having separate branches. An exemplary illustration of an asset datastructure instance is provided in FIG 3.

The asset datastructure instances are generated at predetermined time intervals. For example, at every fifth state transition of the assets 182-188. In an embodiment, the asset datastructure instances are created for each state transition of the assets 182-188.

The state of the assets 182-188 refers to real-time condition of the assets 182-188. For example, the asset 182 is operating on firmware version 2.2 with OPC-UA communication standard. The state of the asset 182 indicated by the firmware version 2.2 and the OPC-UA. If the firmware version is updated to 2.4 the asset 182 undergoes a soft state transition. The updation of the firmware version to 2.4 can be automatically reversed without manual intervention. Accordingly, when firmware version 2.4 updated the asset 182 is considered to be in a soft state.

In another example, the asset 182 has a faulty component 182a and the component 182a is replaced. The replacement of the asset may involve manual intervention and therefore, the state of asset 182 after replacement is a hard state.

To determine the state of the assets 182-188, the state module 136 is configured to identify whether the assets 182-188 have undergone the hard state transition or the soft state transition. Further, the state module 136 is configured to initiate generation of the asset datastructure instances based on the predetermined time interval. Furthermore, the state module 136 is configured to indicated roll-back of the state of the assets 182-188.

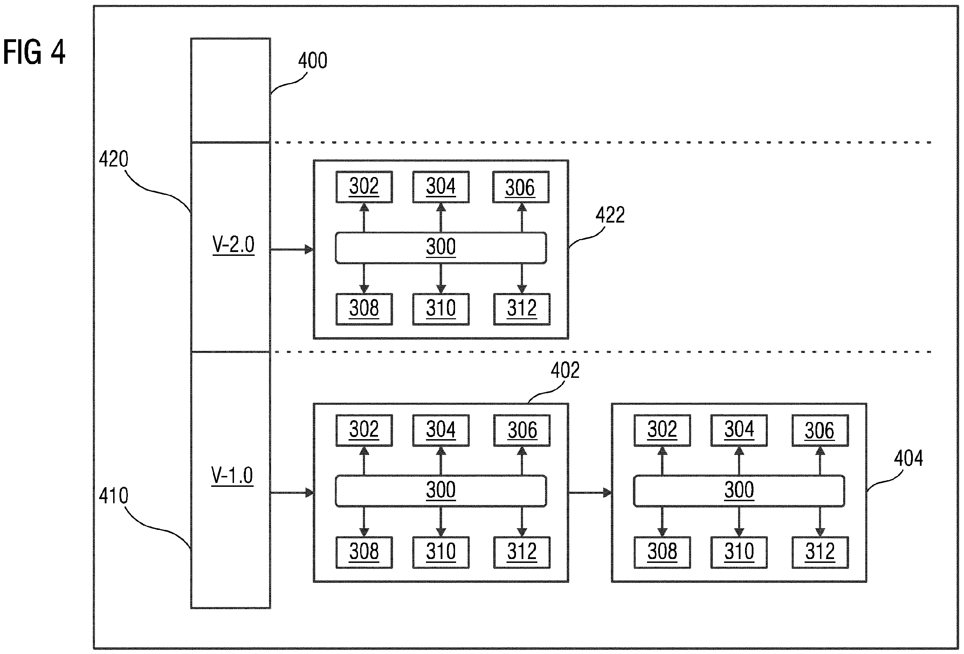

The model generator module 138 is configured to generate the asset models of the assets 182-188 by aggregating the asset datastructure instances across multiple states of the asset 182-188. The asset models act as a stack of multiple asset datastructure instances. An illustration of an asset model is provided in FIG. 4.

The asset models are stored in the database 160. Updation to the asset models are also stored in the database 160 at regular intervals. Accordingly, historical asset models may be retrieved to access the heterogenous data streams associated with the assets 182-188.

The updation of the asset models may occur when the state transition occurs. As indicated earlier the state transition may also occur from a new state to an older state. For example, if the firmware version of the asset 182 is reversed from version 2.4 to 2.2. Also, for example if replacement of the component 182a is reversed. Such state transitions are referred to as roll-back.

When the assets 182-188 are rolled-back to the older state, the asset datastructure instances are also rolled-back. Accordingly, the state module 136 initiates roll-back of a new-asset datastructure instance reflecting the new state of the assets 182-188 to an older-asset datastructure instance reflecting the older state of the assets 182-188.

The state module 136 is configured to determine requirement of the roll-back of the assets 182-188 to the older state. The determination is made based on stability of the new state of the assets 182-188. Further, the state module 136 determines the stability of the new state is determined based on anomalies detected in the assets 182-188 when in the new state.

For example, if the updation of the firmware to version 2.4 results in excessive consumption of network bandwidth the state module 136 may determine to roll-back to firmware version 2.2 (assuming version 2.2 consumes lesser network bandwidth). For soft state transitions, the anomalies maybe detected based on several parameters such as processing requirements and memory-based constraints, bandwidth requirement, data security requirements, etc. For hard state transitions, the anomalies maybe detected based on deviations identified in the sensor data. For example, deviation in vibration, temperature, pressure, flux, voltage, etc.

In an embodiment, the model management module 135 transmits the requirement of the roll-back to the user device 110. Further, the model management module 135 may initiate display of the requirement of the roll-back of the assets 182-188 to a user of the user device 110. The requirement is displayed on the display 118. The displayed requirement may include the anomalies detected in the new state and the differences between the older state and the new state of the assets 182-188. The user may elect to roll-back the state of the assets 182-188. In another embodiment, the state module 136 automatically initiates roll-back of the state of the assets 182-188.

The state module 136 may initiate roll-back of the asset datastructure instances without any change of state of the assets 182-188. The datastructure roll-back is initiated when the operation of the assets 182-188 in the new state needs to be compared with operation of the assets 182-188 in the older state. For example, the comparison may be performed to detect anomalies in the new state of the assets 182-188.

When the asset datastructure instances are rolled-back the model generator module 138 is configured to update the asset models for the assets 182-188.

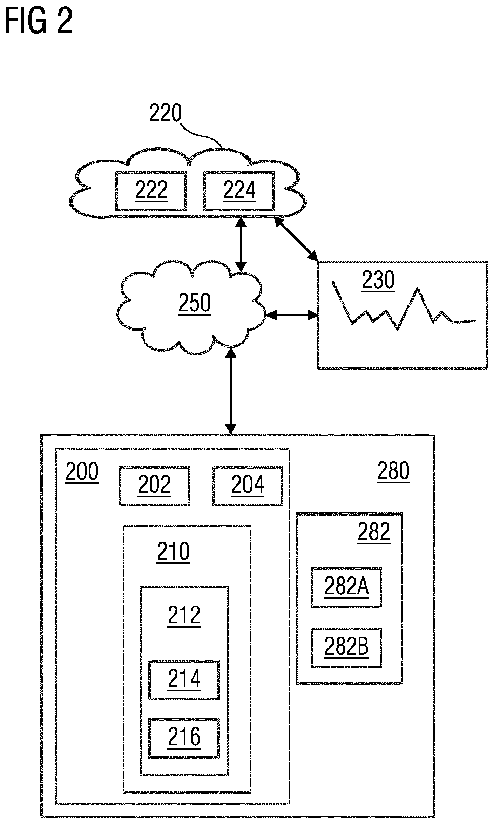

FIG 2 illustrates a block diagram of an apparatus 200 in an IIoT environment 280 to generate asset datastructure instances for an asset 282, according to an embodiment of the present invention. For the purpose of FIG 2, the apparatus 200 is an edge device 200.

The edge device 200 includes an operating system 202, a memory 204 and application runtime 210. The operating system 202is an embedded real-time operating system (OS) such as the Linux™ operating system. The edge operating system 202 enables communication with the sensing and monitoring devices in the IIoT environment 280 and with an IoT cloud platform 220. The edge operating system 202 also allows running one or more software applications such as datastructure module 212 deployed in the edge device 200. The application runtime 210 is a layer on which the datastructure module 212 is installed and executed in real-time. The edge device 200 communicates with the cloud platform 220 via a network interface 250. The cloud platform 220 includes a database 222 and is configured to execute model management module 224.

During operation, the edge device 200 receives the heterogenous data streams associated with IIoT environment 280, the asset 282, the hardware component 282A and the software component 282B. In an embodiment, the heterogenous data streams associated with historical operation of the hardware component 282A are stored in the database 222. The edge device 200 receives the historical heterogenous data streams via the network interface 250.

The datastructure module 212 includes a meta-data module 214 and a state module 216. The operation of the modules 212, 214 and 216 is similar to the operation of the module 132, 134 and 136. Accordingly, the datastructure module 212 is configured to generate asset datastructure instance for the asset 282.

The edge operating system 202 is configured to transmit the asset datastructure instance to the cloud platform 220. The asset datastructure instances may be communicated individually or after aggregation. In an embodiment, the asset data-structure instances are aggregated and transmitted to the cloud platform 220 based on consumption of the memory 204 or availability of network bandwidth.

The cloud platform 220 receives the asset datastructure instances to generate an asset model for the asset 282. The asset model is generated and managed by the model management module 224. The operation of the model management module 224 is similar to the operation of the module 138 in FIG 1. The model management module 224 is further configured to update the asset model based on a state of the asset 282.

The cloud platform 220 may include a display 230. Alternatively, the display 230 is a user device connected to the cloud platform 220 via the network interface 250. The display 230 is configured to render analytics based on the asset model. For example, the display 230 displays the asset remaining life and predicted down-time of the IIoT environment 280 based on the asset model. Further, the display 230 may be used to render the state of the asset 282. Furthermore, the display 230 renders a requirement to roll-back the state of the asset.

FIG 3 illustrates an asset datastructure instance 300 for the asset 282, according to an embodiment of the present invention. For the purpose of FIG 3 and FIG 4, the asset 282 is a Heat Pump (not shown in FIGs 3 and 4). Accordingly, the asset datastructure instance 300 is herein after referred as pump datastructure instance 300.

The pump datastructure instance 300 includes branches 302-312. The branches are component datastructure instances and indicate hardware and software components of the Heat Pump. For example, the component datastructure instances include compressor datastructure instance 302, condenser datastructure instance 304, evaporator datastructure instance 306, firmware datastructure instance 308, warranty datastructure instance 310 and manual datastructure instance 312.

In an embodiment, the component datastructure instances are generated as follows:
Compressor datastructure instance 302

   ```
{
     "id": "comp-heatpump-chp1234", g:]
     "type": "dynamic axial flow",
     "model": "CH0021",
     "sub-components": [
     "blade": {
     "type": "xyz",
     },
     "vane": {
     .}.]
```
Condenser datastructure instance 304:

   ```
     {
     "id": "cond-heatpump-cohp009",
     "type": "Evaporative",
     "model": "CH987",
     }
```
Firmware datastructure instance 308:

   ```
     {
     "id": "frmwr-hp-893",
     "version": "V1.2.0",
     "name": "nanoboxFirmware",
     "description": "a small description",
     "metadata": [
     ]
     }
```
Warranty datastructure instance 310:

   ```
     {
     "id": "warrenty-ab0234",
     "name": "warranty info",
     "language": "English United States",
     "refLink": "file://heatpump/warranty.html"
     "Warranty date": "05/06/2020",
     }
```

Similarly, the component datastructure instances 302-312 for all the components of the Heat Pump is defined. The aggregation of the component datastructure instances 302-312 results in the pump datastructure instance 300. The pump datastructure instance 300 is generated along with state and timeseries data. Accordingly, as shown in FIG 3, the pump datastructure 300 represents the Heat Pump and links the components.

FIG 4 illustrates a heat pump model 400 for the Heat Pump, according to an embodiment of the present invention. The heat pump model 400 is generated by aggregating the pump data-structure instance determined at multiple states 402, 404 and 422. For example, the states 402, 404 and 422 indicate soft state transitions. The aggregation of the pump datastructure instance occurs across multiple versions 410 and 420 to generate the heat pump model 400. For example, the versions 410 and 420 indicate hard state transitions.

The heat pump model 400 is configured to store the versions and revisions (states) of the Heat Pump to provide the single source of information. The heat pump model 400 acts as a multi-version data structure that links the component data structure instances 302-312. In an embodiment, the component data structure instances 302, 304, 306 and 308 may be stored on a first cloud computing platform. Further, the component data structure instances 310, 312 are stored in a second cloud computing platform. The heat pump model links the component data structure instances 302-312 to avoid data duplication/ redundancy and replication cost.

In an embodiment, the component data structure instances are referenced as a soft link ($ref:<link to component data structure instance>) to avoid the redundant storage of the data. The soft link makes the heat pump model 400 lightweight such that the retrieval of the data will be faster. Further, the soft links makes the data structure flexible to add any new data types and components. This is achieved as the heat pump model 400 links the component data structure instances instead of the associated data.

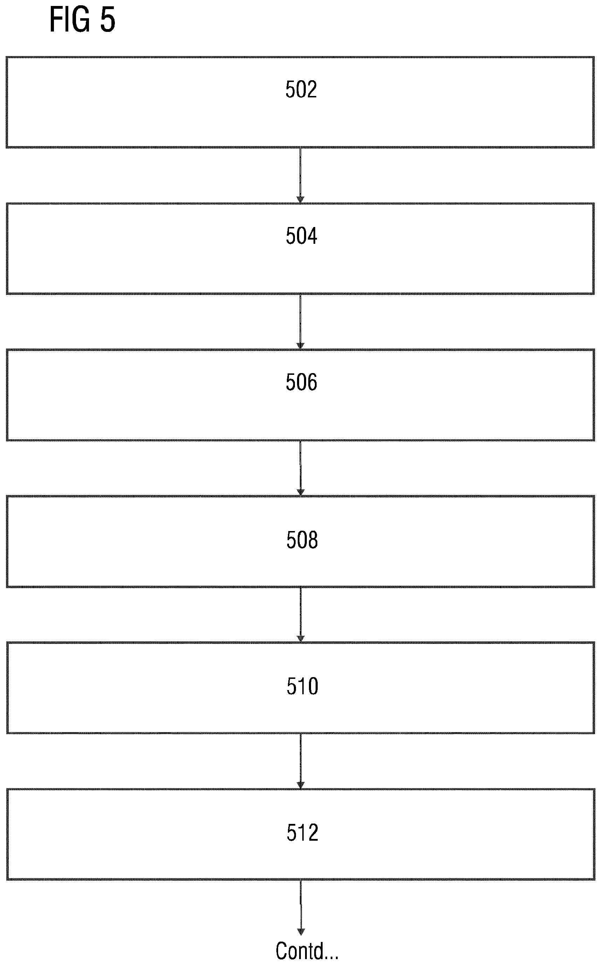

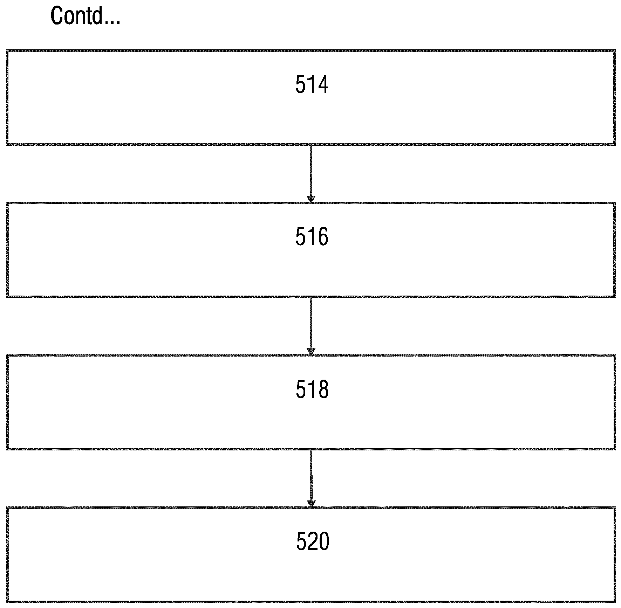

FIG 5 is a flowchart of a method 500 of managing an asset model for an asset in an Industrial Internet of Things (IIoT) environment, according to an embodiment of the present invention. The asset includes an industrial equipment or machinery. The IIoT environment includes the asset and sensing devices that are capable of generating heterogenous data streams associated with operation of the asset and the IIoT environment. The heterogenous data streams are communicated to the cloud computing platform a network interface. The method 500 beings at step 502 by receiving the heterogenous data streams from the IIoT environment.

At step 504, meta-data for the asset is generated by determining association between data points in the heterogenous data streams. Example meta-data includes at least one of a unique identification number, type of asset, firmware version, warranty version, and components of the asset. The association between the data points is determined by using a language independent data-interchange format such as JavaScript Object Notation (JSON).

At step 506, asset datastructure instance is generated by generating component datastructure instances for components of the asset. The components include hardware components and software components of the asset. In an example, the component includes sub-components such as component service data, component warranty version, sensors, etc. The component data-structure instances are thereby created based on the sub-components. Ultimately, the asset datastructure instances by linking component data-structure instances.

At step 508, the state of the asset is determined. The state is determined as one of a hard state and a soft state. The state transition of the asset in the soft state is automatically reversible. The state of the asset refers to real-time condition of the asset. For example, the asset is operating with a Building Automation and Control Networks (BACnet) communication standard. The state of the asset indicated by the version of the BACnet stack such as version 1.0.17-beta. If the BACnet stack version is updated to 1.0.20-beta the asset undergoes a soft state transition. The updation of the BACnet version can be automatically reversed without manual intervention. In another example, the asset operates on using the Modbus communication standard. The asset communication standard is updated to BACnet stack version 1.0.20-beta. Such an updation of the communication standard may require manual intervention and may not be reversed automatically.

At step 510 the asset model of the asset is generated from a plurality of asset datastructure instances. The asset model may be represented as a stack of asset datastructure instances generated across multiple states. The asset model is configured as a means to link the heterogenous data streams, which may be stored in different systems of a cloud computing platform. In an embodiment, growth of the stack represent hard state transition of the asset. Each hard state transition of the asset involve soft state transitions of the asset.

At step 512 requirement of roll-back of the asset is determined. The roll-back of the state of the asset to the older state is based on stability of the new state of the asset. The stability of the new state is determined based on anomalies detected in the asset when in the new state. Considering the example of the BACnet stack version update. The asset with BACnet stack version 1.0.20-beta is reversed to the version 1.0.17-beta if the asset is unable to manage the computation requirements of the BACnet stack version 1.0.20-beta.

At step 514, the roll-back is initiated. The roll-back is of a new-asset datastructure instance reflecting a new state of the asset to an older-asset datastructure instance reflecting an older state of the asset. The roll-back is initiated after displaying the requirement of the roll-back of the asset to a user. Preferably, differences between the older state and the new state of the asset is displayed so that the user can elect whether to implement the roll-back.

At step 516 the asset model is updated based on the roll-back to the older-asset datastructure instance. At step 518 the asset model is stored. The asset model may be stored after generation and/or after every updation. The asset model is preferably stored in a database of a computing platform. Further, at step 520 a user, such as an operator, can access the heterogenous data streams associated with the asset using the asset model.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

Further embodiments:
1. A method of managing an asset model (400) for at least one asset in an Industrial Internet of Things (IIoT) environment (180, 280), the method comprising:
   receiving heterogenous data streams associated with the IIoT environment (180, 280);
   obtaining an asset datastructure instance (402, 404, 422), wherein the asset datastructure instance (402, 404, 422) indicates a state of the asset (182-188, 282) in the IIoT environment (180, 280); and
   generating the asset model (400) of the asset (182-188, 282) from a plurality of asset datastructure instances (402, 404, 422).
2. The method according to embodiment 1, wherein obtaining the asset datastructure instance (402, 404, 422) comprises:
   generating meta-data for the asset (182-188, 282) by determining association between data points in the heterogenous data streams, wherein the meta-data includes at least one of a unique identification number, type of asset (182-188, 282), firmware version, warranty version, and components (182a-188a, 282A, 282B) of the asset; and
   generating the asset datastructure instances (402, 404, 422) at predetermined states of the asset (182-188, 282) based on the meta-data generated from the heterogenous data streams.
3. The method according to embodiment 2, wherein generating the asset datastructure instances (402, 404, 422) at the predetermined states of the asset (182-188, 282), comprises:
   generating component datastructure instances (302, 304, 306, 308, 310, 312) for components (182a-188a, 282A, 282B) of the asset (182-188, 282), wherein the components include hardware components and software components of the asset (182-188, 282); and
   generating the asset datastructure instances (402, 404, 422) by linking component datastructure instances at the predetermined states.
4. The method according to any of the preceding embodiments, further comprising:
   generating the asset model (400) of the asset (182-188, 282) by aggregating the asset datastructure instances (402, 404, 422) across multiple states (410, 420) of the asset (182-188, 282).
5. The method according to any of the preceding embodiments, further comprising:
   determining the state of the asset (182-188, 282) in the IIoT environment (180, 280) as one of a hard state and a soft state, wherein state transition of the asset (182-188, 282) in the soft state is automatically reversible.
6. The method according to embodiment 5, further comprising:
   initiating a roll-back of a new-asset datastructure instance (404) reflecting a new state of the asset to an older-asset datastructure instance (402) reflecting an older state of the asset, when the asset transitions from the new state to the older state; and
   updating the asset model (400) based on the roll-back to the older-asset datastructure instance (402).
7. The method according to one of embodiment 5 and 6, further comprising:
   determining requirement of the roll-back of the asset (182) to the older state based on stability of the new state of the asset (182), wherein stability of the new state is determined based on anomalies detected in the asset (182) when in the new state.
8. The method according to one of embodiment 5 to 7, further comprising:
   displaying the requirement of the roll-back of the asset (182) to a user, preferably including differences between the older state and the new state of the asset (182).
9. The method according to any of the preceding embodiments, further comprising:
   storing the generated asset model (400) of the asset (182-188, 282), preferably in a database (160) of a computing platform (120).
10. The method according to any of the preceding embodiments, further comprising:
   accessing the heterogenous data streams that is associated with one of the IIoT environment (180, 280) and the asset (182-188, 282) using the generated asset model (400).
11. An apparatus (200) for managing an asset model (400) for at least one asset (182-188, 282) in an Industrial Internet of Things (IIoT) environment (180, 280), the apparatus comprising:
   one or more processing units (202); and
   a memory unit (210) communicative coupled to the one or more processing units, wherein the memory unit comprises a model management module stored in the form of machine-readable instructions executable by the one or more processing units, wherein the model management module (212) is configured to perform one or more method steps according to embodiments 1 to 10.
12. A system (100) for managing an asset model (400) for at least one asset (182-188, 282) in an Industrial Internet of Things (IIoT) environment (180, 280), the system comprising:
   a cloud computing platform (120) comprising:
   a model management module (135) configured to perform one or more method steps according to embodiments 1 to 10.
13. A computer-program product, having machine-readable instructions stored therein, that when executed by a processor, cause the processor to perform method steps according to any of the embodiments 1-10.

### Reference sign list

### FIG 1

system 100
user device 110
processor 114
memory 116
display 118
cloud computing platform 120
communication unit 122
processing unit 124
memory unit 130
datastructure module 132
meta-data module 134
model management module 135
state module 136
model generator module 138
network interface 150
database 160
Industrial Internet of Things (IIoT) environment 180
components 182a, 184a, 186a, 188a
assets 182, 184, 186 and 188

### FIG 2

Apparatus/edge device 200
operating system 202
memory 204
application runtime 210
datastructure module 212
meta-data module 214
state module 216
display 230
network interface 250
IoT cloud platform 220
database 222
model management module 224
IIoT environment 280
asset 282
hardware component 282A
software component 282B

### FIG 3

asset datastructure instance 300
pump datastructure instance 300
branches/component datastructure instances 302-312
compressor datastructure instance 302
condenser datastructure instance 304
evaporator datastructure instance 306
firmware datastructure instance 308
warranty datastructure instance 310
manual datastructure instance 312

### FIG 4

heat pump model 400
states 402, 404 and 422
versions 410 and 420

FIG 5 method

## Claims

1. A method of managing an asset model (400) for at least one asset in an Industrial Internet of Things (IIoT) environment (180, 280), the method comprising:
receiving heterogenous data streams associated with the IIoT environment (180, 280);
obtaining an asset datastructure instance (402, 404, 422), wherein the asset datastructure instance (402, 404, 422) indicates a state of the asset (182-188, 282) in the IIoT environment (180, 280); and
generating the asset model (400) of the asset (182-188, 282) from a plurality of asset datastructure instances (402, 404, 422).

2. The method according to claim 1, wherein obtaining the asset datastructure instance (402, 404, 422) comprises:
generating meta-data for the asset (182-188, 282) by determining association between data points in the heterogenous data streams, wherein the meta-data includes at least one of a unique identification number, type of asset (182-188, 282), firmware version, warranty version, and components (182a-188a, 282A, 282B) of the asset; and
generating the asset datastructure instances (402, 404, 422) at predetermined states of the asset (182-188, 282) based on the meta-data generated from the heterogenous data streams.

3. The method according to claim 2, wherein generating the asset datastructure instances (402, 404, 422) at the predetermined states of the asset (182-188, 282), comprises:
generating component datastructure instances (302, 304, 306, 308, 310, 312) for components (182a-188a, 282A, 282B)of the asset (182-188, 282), wherein the components include hardware components and software components of the asset (182-188, 282); and
generating the asset datastructure instances (402, 404, 422) by linking component datastructure instances at the predetermined states.

4. The method according to any of the preceding claims, further comprising:
generating the asset model (400) of the asset (182-188, 282) by aggregating the asset datastructure instances (402, 404, 422) across multiple states (410, 420) of the asset (182-188, 282).

5. The method according to any of the preceding claims, further comprising:
determining the state of the asset (182-188, 282) in the IIoT environment (180, 280) as one of a hard state and a soft state, wherein state transition of the asset (182-188, 282) in the soft state is automatically reversible.

6. The method according to claim 5, further comprising:
initiating a roll-back of a new-asset datastructure instance (404) reflecting a new state of the asset to an older-asset datastructure instance (402) reflecting an older state of the asset, when the asset transitions from the new state to the older state; and
updating the asset model (400) based on the roll-back to the older-asset datastructure instance (402).

7. The method according to one of claim 5 and 6, further comprising:
determining requirement of the roll-back of the asset (182) to the older state based on stability of the new state of the asset (182), wherein stability of the new state is determined based on anomalies detected in the asset (182) when in the new state.

8. The method according to one of claim 5 to 7, further comprising:
displaying the requirement of the roll-back of the asset (182) to a user, preferably including differences between the older state and the new state of the asset (182).

9. The method according to any of the preceding claims, further comprising:
storing the generated asset model (400) of the asset (182-188, 282), preferably in a database (160) of a computing platform (120).

10. The method according to any of the preceding claims, further comprising:
accessing the heterogenous data streams that is associated with one of the IIoT environment (180, 280) and the asset (182-188, 282) using the generated asset model (400).

11. An apparatus (200) for managing an asset model (400) for at least one asset (182-188, 282) in an Industrial Internet of Things (IIoT) environment (180, 280), the apparatus comprising:
one or more processing units (202); and
a memory unit (210) communicative coupled to the one or more processing units, wherein the memory unit comprises a model management module stored in the form of machine-readable instructions executable by the one or more processing units, wherein the model management module (212) is configured to perform one or more method steps according to claims 1 to 10.

12. A system (100) for managing an asset model (400) for at least one asset (182-188, 282) in an Industrial Internet of Things (IIoT) environment (180, 280), the system comprising:
a cloud computing platform (120) comprising:
a model management module (135) configured to perform one or more method steps according to claims 1 to 10.

13. A computer-program product, having machine-readable instructions stored therein, that when executed by a processor, cause the processor to perform method steps according to any of the claims 1-10.
